# EUROPÄISCHE PATENTSCHRIFT

(11) **EP 1 826 048 B1**
(45) Veröffentlichungstag und Bekanntmachung des Hinweises auf die Patenterteilung: **27.06.2012**
(21) Anmeldenummer: 07002252.0
(22) Anmeldetag: 02.02.2007
(51) Int. Cl.: B60J 7/12

(54) **Cabriolet-Fahrzeug mit einer Hauptsäule**
Convertible vehicle with a main column
Véhicule cabriolet doté d'une colonne principale

(30) Priorität: 28.02.2006 DE 102006009548
(43) Veröffentlichungstag der Anmeldung: 29.08.2007
(73) Patentinhaber: Wilhelm Karmann GmbH, 49084 Osnabrück (DE)
(72) Erfinder: Hollenbeck, Sven, 49492 Westerkappeln (DE); Maaß, Joachim, 49143 Bissendorf (DE)
(74) Vertreter: Kronthaler, Schmidt & Coll.

(56) Entgegenhaltungen:
- DE-A1- 19 706 398
- US-A- 5 785 375
- US-A1- 2004 051 341

## Beschreibung

Die Erfindung betrifft ein Cabriolet-Fahrzeug mit einem beweglichen Dach, das eine von einer Fensterbrüstungslinie aufragende Hauptsäule umfaßt, die bei Dachöffnung heckwärts und abwärts beweglich ist, nach dem Oberbegriff des Anspruchs 1 sowie ein zugehöriges Fahrzeugdach.

Es ist bekannt, Cabriolet-Fahrzeuge mit einer sog. Hauptsäule, also einem von unterhalb der Fensterbrüstungslinie bis in den oberen Dachbereich aufragenden Lenker, der bei geschlossenem Dach hinter den Seitenscheiben steht, zu versehen. An dieser Hauptsäule können ein Bezugsstoff des Daches und eine Dichtungslinie gegenüber seitlichen Scheiben angeordnet sein. Sie kann zur Dachöffnung um ein der Karosserie zugeordnetes Hauptlager nach hinten und unten schwenken. Aus optischen Gründen soll das Lager, um das die Hauptsäule schwenkt, verdeckt unterhalb einer Fensterbrüstungslinie gelegen sein. Die Hauptsäule kann von dort aus dann vertikal oder schräg bis oberhalb des Kopfraumes der Insassen aufragen und sich bis zu einem im geschlossenen Zustand nahezu horizontal liegenden oberen Dachbereich erstrecken.

Dabei kann es zu räumlichen Problemen bei der Dachablage kommen, insbesondere wenn der Insassenraum relativ lang ausgebildet ist und beispielsweise rückseitig durch eine Schottwand abgeteilt ist, die an ihrem Randbereich einen Wasserkanal umfaßt. Bei der für ein großes Dach erforderlichen tiefen Ablage der Hauptsäule in der Karosserie kann es dann während ihres Verschwenkens zu einer Kollision mit Teilen der Karosserie, etwa dem Wasserkanal, kommen. Eine höhere Position des Lagers ist jedoch häufig nicht möglich, ohne daß dieses optisch störend oberhalb der Fensterbrüstungslinie liegen würde.

Die US 5,785,375 zeigt ein zweiteiliges Rectractable Hardtop, zu dessen Öffnung zunächst die Seitenscheiben versenkt werden müssen, ehe eine Bewegung der Dachteile eingeleitet werden kann. Dies ist erforderlich, weil das Lager, um das herum die dort gezeigte C-Säule zur Dachöffnung abwärts verschwenkbar ist, während der gesamten Dachöffnungsbewegung aus seiner ursprünglichen Stellung nach vorne verlagert wird. Bei dieser Verlagerung wird die C-Säule des Daches vollständig mitgenommen und mit einer Komponente in Fahrtrichtung verlagert.

Eine ähnliche Bewegung der C-Säule eines Retractable Hardtops zeigt auch die DE 197 06 398 A1.

Beide Bewegungen lassen sich nicht auf ein mit einem Bezug versehenes Dach übertragen.

Gemäß der US 2004/051341 A1 schwenkt ein hinterer Dachteil über zwei Schwenkhebel um zwei karosseriefeste Lagerstellen unterhalb einer Fensterbrüstungslinie, so daß es sich hier jeweils um reine Schwenkbewegungen mit nur einem Freiheitsgrad handelt.

Der Erfindung liegt das Problem zugrunde, auch bei schwierigen Raumverhältnissen eine Kollisionsgefahr eines zumindest teilweise mit einem Bezug versehenen Daches mit Seitenscheiben und anderen Teilen der Karosserie bei seiner Bewegung zu vermeiden.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 12. Hinsichtlich vorteilhafter Ausgestaltungen der Erfindung wird auf die weiteren Ansprüche 2 bis 11 verwiesen. Mit der Erfindung kann für ein gattungsgemäßes Cabriolet-Fahrzeug sichergestellt werden, daß auch bei problematischen Raumverhältnissen eine Kollision der Hauptsäule in der Dachöffnungsbewegung durch Aufwärtsverlagerung ihres Hauptlagers vermieden ist. Dennoch kann dieses Hauptlager optisch unauffällig bei geschlossenem Dach unterhalb einer Fensterbrüstungslinie gelegen sein. Dadurch, daß die Hauptsäule mit einer Dichtungslinie zur Abdichtung des geschlossenen Daches gegenüber seitlichen Scheiben versehen ist, wobei durch die Verlagerung des Lagers, das die Hauptsäule trägt, ein sicheres Wegführen der Hauptsäule nach schräg oben ermöglicht ist, können auch bei der Dachbewegung die Seitenscheiben geschlossen bleiben. Eine Fehlbedienung ist dann auch bei einem manuellen Bewegungsablauf ausgeschlossen.

Beim Schließen des Daches kommt in der Endphase der Dachbewegung die Dichtungslinie durch Abwärtsverlagerung zur dichtenden Anlage an die Seitenscheiben, so daß ohne deren Absenkung auch das Wiederschließen des Fahrzeugs ermöglicht ist.

Für eine problemlose und zuverlässige Dachbewegung kann dem Fahrzeug neben der Hauptsäule eine Hauptführungsstange zwischen Dach und Karosserie zugeordnet sein. Deren Lager liegt in Fahrtrichtung vor dem der Hauptsäule. Die Hauptführungsstange selbst tritt bei der Dachbewegung entsprechend nach vorne vor, kann jedoch bei geschlossenem Dach überwiegend innerhalb der lichten Weite zwischen den quer außen liegenden Hauptsäulen verdeckt liegen und gegenüber diesen nach hinten durchschwenken. Hauptführungsstange und Hauptsäule können vorteilhaft nach Art eines Schwenkparallelogramms auf das Dach einwirken.

Insbesondere ist es in der Dachbewegung günstig, wenn die Hauptführungsstange an einem ebenfalls beweglichen Lager gehalten ist, das zumindest während eines Teils der Dachöffnungsbewegung gegenüber der geschlossenen Stellung mit aufwärts verlagerbar ist. Diese Verlagerung kann jedoch gegenüber der Verlagerung des Hauptlagers der Hauptsäule mit vermindertem Weg ausfallen; beispielsweise können, was steuerungstechnisch einfach und mechanisch unempfindlich ist, das Lager der Hauptführungsstange und das Lager der Hauptsäule an einem gemeinsamen Hebel, zum Beispiel einem Schwenkhebel, gehalten sein, der gegenüber einem karosseriefesten Hauptlager während der Dachöffnung beweglich ist. Bei einem solchen Schwenkhebel liegt dann das Hauptlager der Hauptsäule weiter vom karosseriefesten Drehpunkt des Schwenkhebels entfernt als das Lager der Hauptführungsstange. Der Verlagerungsweg des Hauptlagers ist damit größer als der des Lagers der Hauptführungsstange.

Ein von einem Antrieb ansteuerbares Vorgelegegetriebe kann zudem einen geringen Kraftaufwand für die Aufwärtsverlagerung zumindest des Lagers der Hauptsäule sicherstellen. Ein eigener Antrieb für die zusätzliche Verlagerung, die der Schwenkbewegung überlagert ist, ist dann entbehrlich. Die Bewegung des Lagers der Hauptsäule ist besonders vereinfacht, wenn dieses in geöffneter Dachstellung in derselben Position wie in geschlossener Dachstellung liegt und die zusätzliche Verlagerungskomponente nur während der Dachbewegung wirksam ist. Die Dachkonstruktion und die Endlagen des Daches können dann gegenüber einem reinen Schwenken um ein festes Lager unverändert bleiben. Dennoch ist eine Hindernisumgehung in der Bewegung ermöglicht.

Diese Hindernisumgehung setzt vorteilhaft mit beginnender Dachöffnung ein und ist mit dieser zwangsgekoppelt. Eigene Steuerungsmittel für die Zusatzbewegungskomponente des oder der Lager sind dann entbehrlich.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

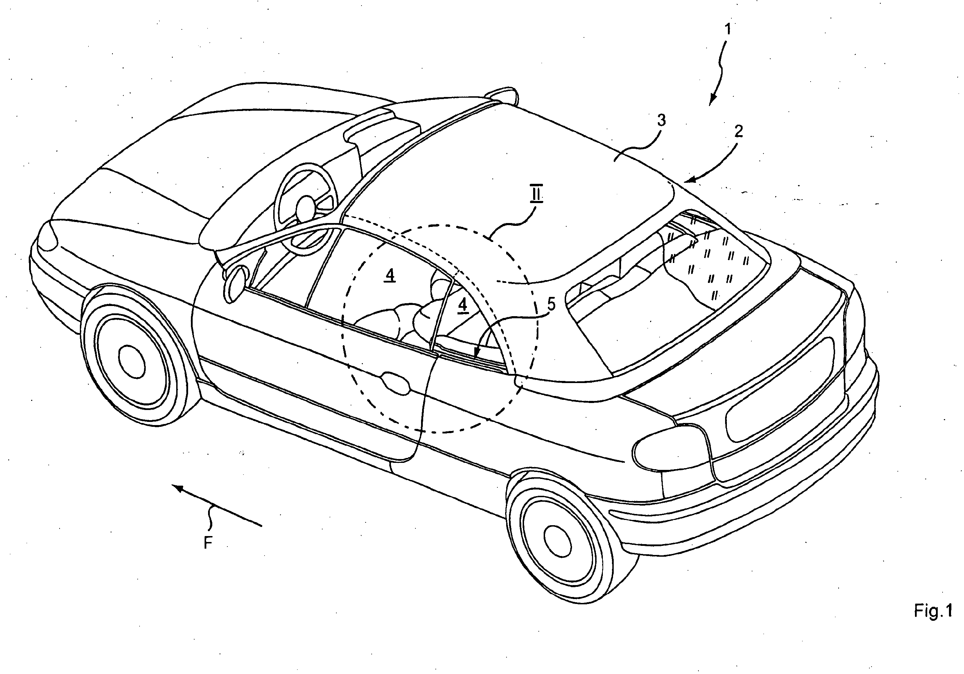

- Fig. 1: eine perspektivische Ansicht eines erfindungsge- mäßen Cabriolet-Fahrzeugs von schräg hinten bei ge- schlossenem Dach,
- Fig. 2: eine herausgezeichnete Einzeldarstellung etwa des Details II in Fig. 1 in seitlicher Ansicht ohne Dachbezug und mit transparenter Karosserie sowie zwei zusätzlichen eingezeichneten horizontalen Hilfslinien für die Stellung der Lager von Haupt- säule und Hauptführungsstange bei geschlossenem Dach,
- Fig. 3: eine ähnliche Ansicht wie Fig. 2 bei beginnender Dachöffnung durch Einziehen eines Antriebsorgans und Krafteinwirkung auf die Hauptsäule und einen um ein festes Hauptlager schwenkbaren Hebel,

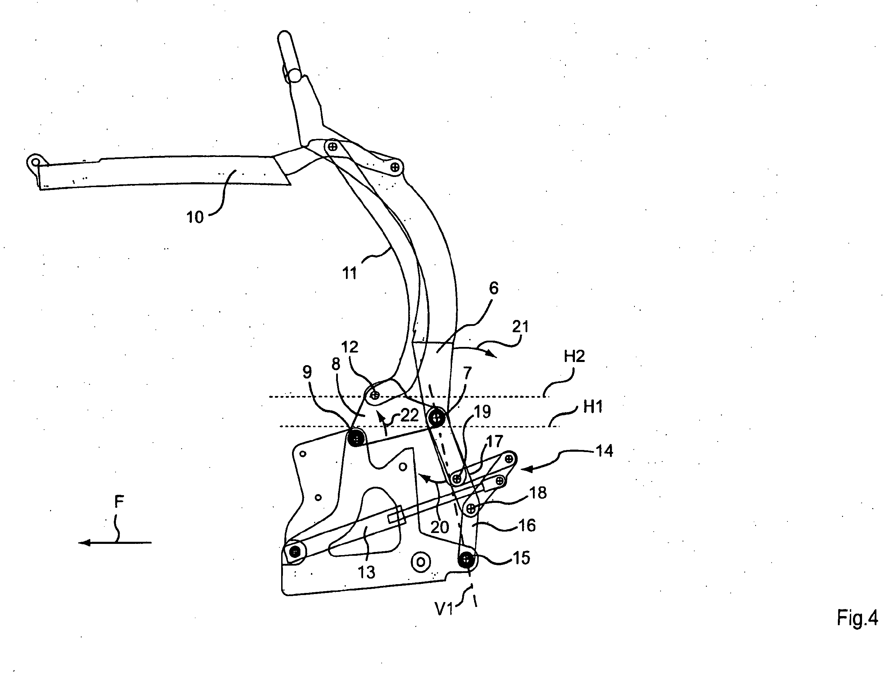

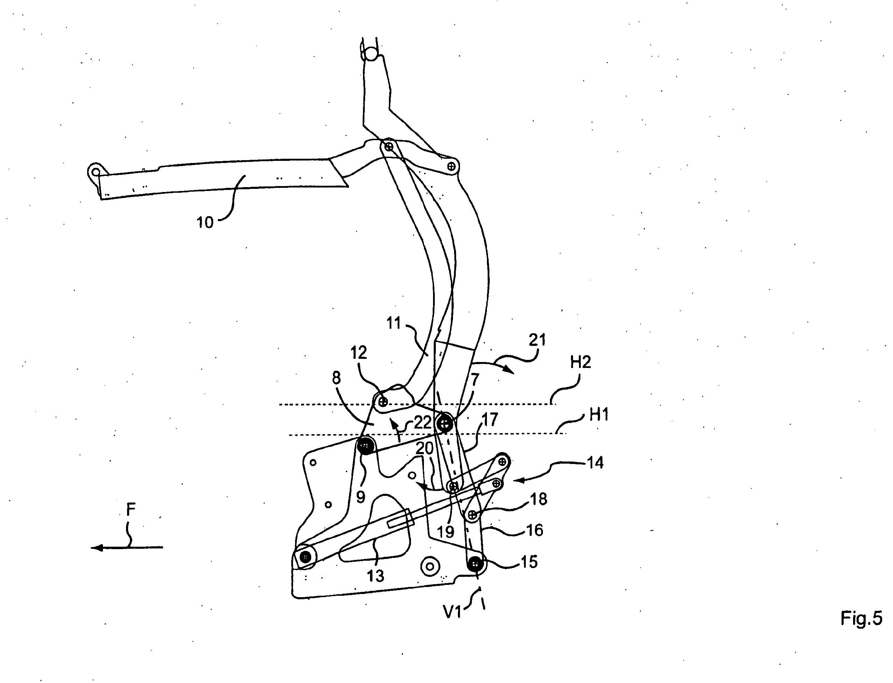

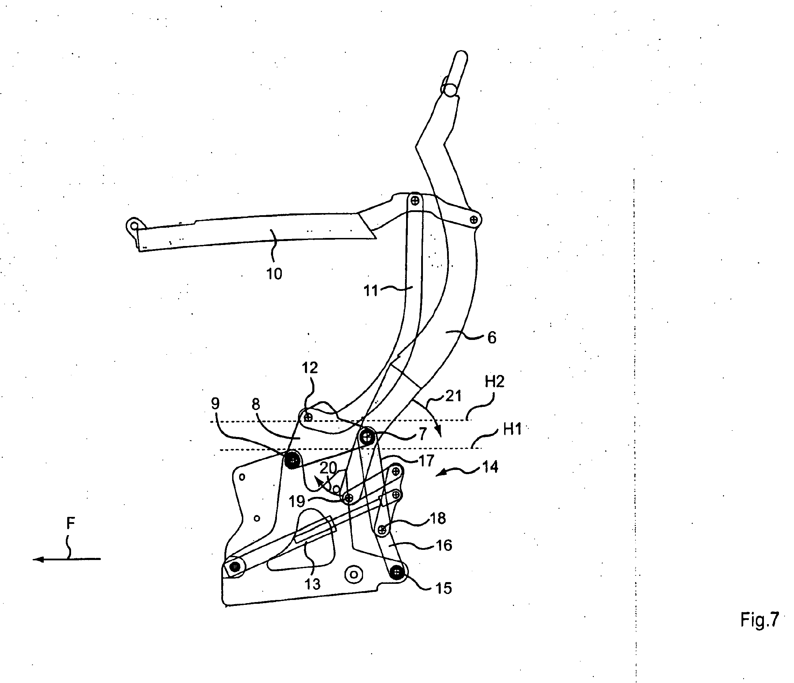

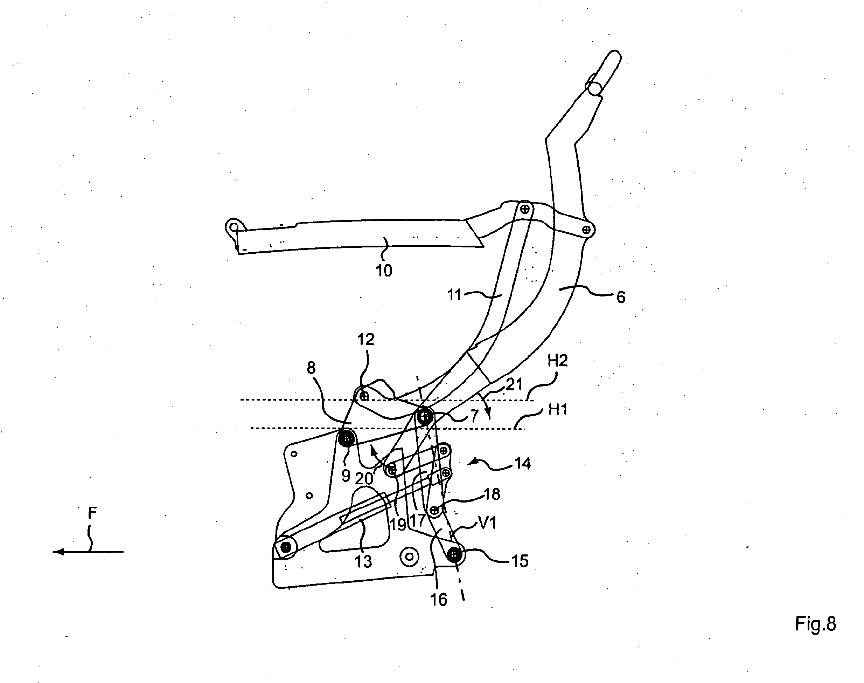

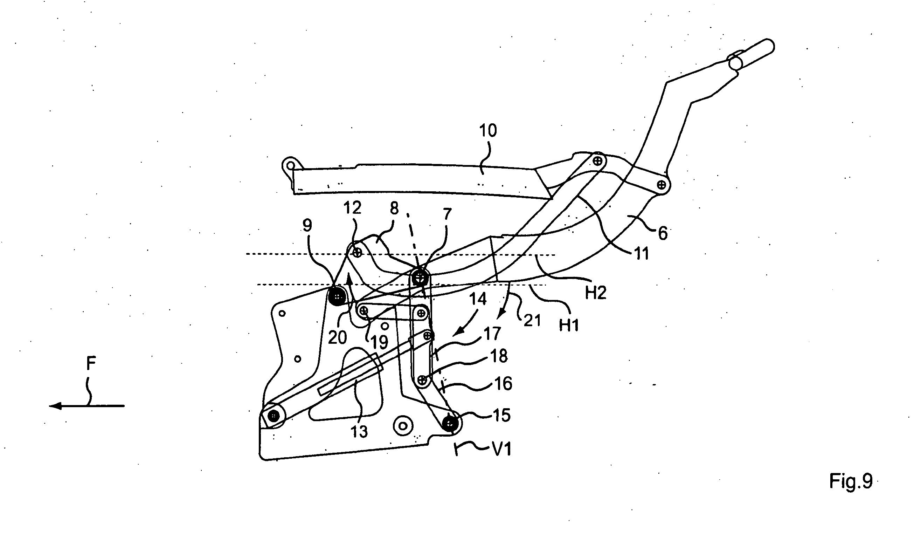

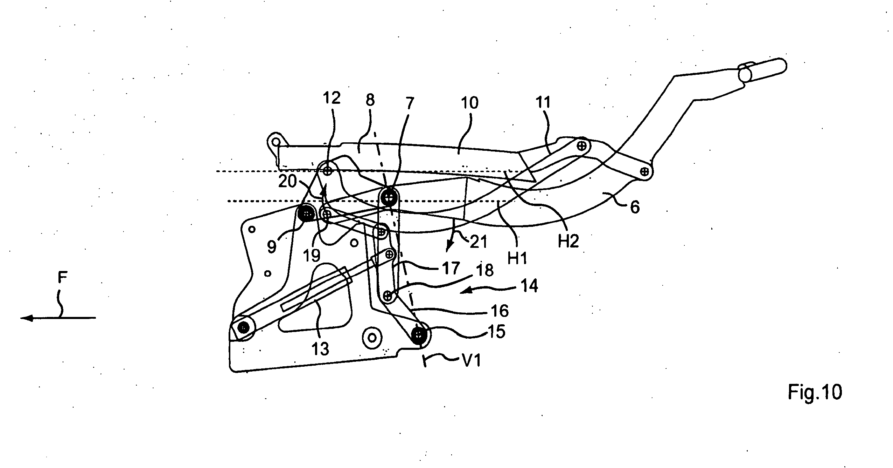

- Fig. 4 bis Fig. 11: den weiteren Ablauf der fortschreitenden Dachöffnung in ähnlicher Ansicht wie in Fig. 3,
- Fig. 12: eine ähnliche Ansicht wie Fig. 2 mit zusätzlich eingezeichneten Bahnkurven der Lager der Hauptsäule und der Hauptführungsstange während der Dachöff- nungsbewegung,
- Fig. 13: eine Überlagerung der Ansichten aus den Figuren 2 bis 11 während des Dachöffnens oder -schließens.

Das erfindungsgemäße Cabriolet-Fahrzeug 1 umfaßt im hier dargestellten Ausführungsbeispiel ein außerhalb einer Heckscheibe vollständig von einem Bezug 3 übergriffenes Dach 2, wobei alternativ auch Lösungen mit nur einem Teilbezug und zum Beispiel teilweise starren Dachteilen möglich sind. Auch kann die Dachform variieren und zum Beispiel nach hinten auslaufende seitliche Finnen oder oberhalb von Seitenfenstern 4 separate Rahmen vorsehen. Auch kann innerhalb des Daches 2 ein Schiebe- oder Aufstellbereich vorgesehen sein.

Das erfindungsgemäße Cabriolet-Fahrzeug 1 kann sowohl ein Zweisitzer sein als auch insbesondere einen größeren Insassenraum mit zwei oder mehr Sitzreihen hintereinander umfassen.

In jedem Fall umfaßt das Dach 2 an jeder Querseite des Fahrzeugs 1 eine im Bereich an oder unterhalb einer seitlichen Fensterbrüstungslinie 5 beginnende und sich bei geschlossenem Dach 2 aufwärts - häufig mit einer zusätzlichen Komponente in Fahrtrichtung F - erstreckende Hauptsäule 6, die einen Lenker für die Dachbewegung darstellt.

Diese Hauptsäule 6 ist an einem bei geschlossenem Dach 2 unterhalb der Fensterbrüstungslinie 5 gelegenen Lager 7 schwenkbar gehalten. Dieses Lager 7 ist erfindungsgemäß nicht karosseriefest, sondern hier beispielhaft an einem beweglichen Lenker 8 angeordnet. Dieser ist seinerseits beweglich - im gezeichneten Ausführungsbeispiel schwenkbar - an einem karosseriefesten Hauptlager 9 gehalten. Auch ein Verschieben des Lagers 7 in einer Kulisse oder die Anordnung des Lagers 7 an einem während der Dachöffnung separat ausfahrbaren Hubzylinder oder eine sonstige Bewegungsmöglichkeit wären alternativ zu seiner Anordnung an dem schwenkbaren Hebel 8 möglich. In jedem Fall ist während des Dachöffnens oder -schließens das Lager 7 mit einer aufwärtsgerichteten Bewegungskomponente aus seiner auf der Hilfslinie H1 befindlichen Ruhestellung anhebbar.

Nach oben hin erstreckt sich die Hauptsäule 6 bis in den ungefähr horizontalen Bereich des Daches 2. Dort kann an der Hauptsäule 6 zumindest ein weiterer, das Dach 2 nach vorne verlängernder seitlicher Dachrahmen 10 beweglich gehalten sein.

Die Hauptsäule 6 kann zudem an ihrer in Fahrtrichtung vorderen Kante mit einer hier nicht näher eingezeichneten Dichtungslinie zu den Seitenscheiben 4 versehen sein und punktuelle oder linienhafte Anbindungen für den Bezugsstoff 3 umfassen.

Neben der Hauptsäule 6 ist hier als weiterer Lenker für die Dachabstützung und -bewegung eine Hauptführungsstange 11 vorgesehen, die sich ebenfalls zwischen der Fensterbrüstungslinie 5 und dem oberen Horizontalbereich des Daches 2 erstreckt. Diese Hauptführungsstange 11 ist an einem Lager 12 gehalten, das ebenfalls gegenüber der Karosserie beweglich gehalten sein kann. Im hier gezeichneten Ausführungsbeispiel ist das Lager 12 zusammen mit dem Lager 7 an dem Schwenkhebel 8 gehalten und somit bei dessen Schwenken um das karosseriefeste Hauptlager 9 aus seiner auf der Hilfslinie H2 gelegenen Ruhestellung mit einer aufwärtsgerichteten Komponente anhebbar.

Hauptsäule 6 und Hauptführungsstange 11 wirken nach Art eines Schwenkparallelogramms, das sich bei der Dachöffnung zunächst ebenfalls öffnet, auf das Dach 2 ein.

Für die Dachbewegung ist an jeder Seite ein Antrieb, hier ein Hydraulikzylinder 13, vorgesehen, der über ein kraftverstärkendes und -umlenkendes Vorgelegegetriebe 14 auf die Hauptsäule 6 in zweierlei Bewegungssinnen, nämlich einerseits drehend und andererseits anhebend, einwirkt. Das Vorgelegegetriebe 14 umfaßt zwischen dem beweglichen Lager 7 und einem karosseriefesten Lager 15 zwei Lenker 16, 17, die bei geschlossenem Dach 2 im Gelenk 18 unter einem stumpfen Winkel rechts der Verbindungslinie V1 zwischen den Lagern 7, 15 zueinander stehen, während der Dachöffnung in eine geradlinige Parallelstellung zueinander auf der Verbindungslinie V1 gelangen und im weiteren zur anderen Seite dieser Linie V1 durchschwenken und dann dort überstumpf abgewinkelt zueinander stehen. Mit dem Strecken der Lenker 16, 17 zueinander während der Bewegung ist ein Anheben des Lagers 7 verbunden, so daß dieses zumindest während eines Teils der Bewegung des Daches 2 gegenüber seiner Ruhestellung auf der Hilfslinie H1 aufwärts verlagert ist.

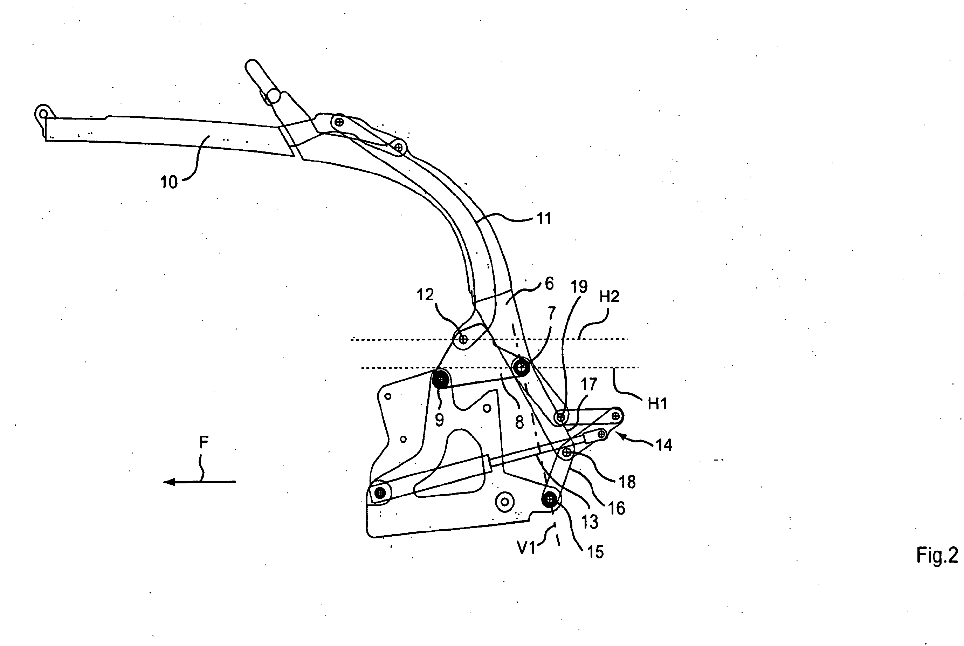

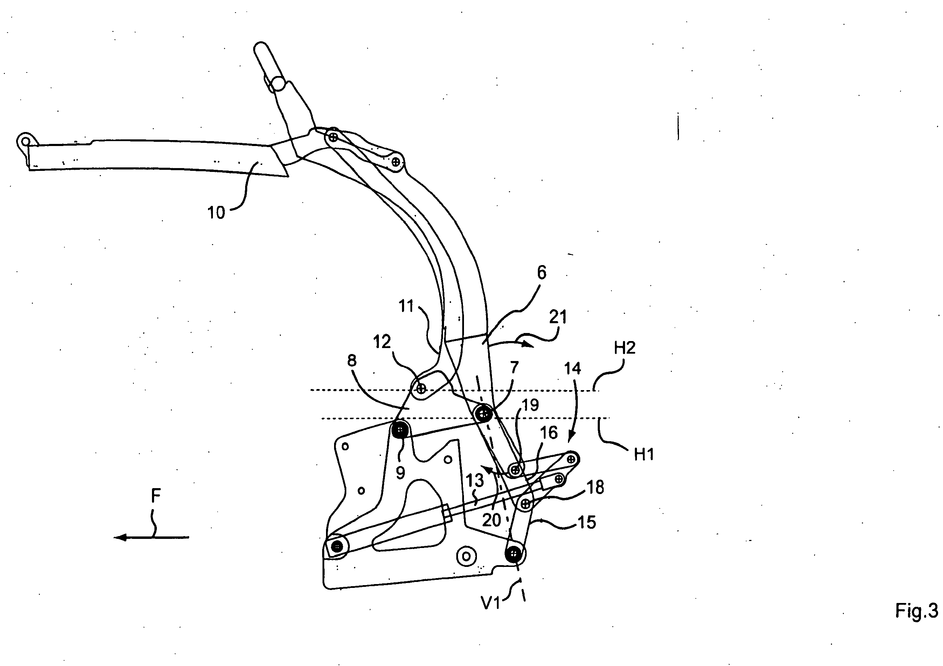

Zum Öffnen des Daches 2 aus der geschlossenen Stellung nach Fig. 2 wird der Hubkolben des Antriebsorgans 13 eingefahren, so daß über das Vorgelegegetriebe 14 die schon beschriebene Winkelvergrößerung im Gelenk 18 zwischen den Lenkern 16, 17 einsetzt und dadurch direkt mit beginnender Dachöffnung (Übergang von Fig. 2 zu Fig. 3) ein Anheben des an dem Lenker 17 angeordneten Lagers 7 zwangsweise und ohne weitere Steuerungselemente stattfindet. Gleichzeitig wird das über das Lager 7 nach unten ragende Ende 19 der Hauptsäule 6 in Richtung des Pfeils 20 mit einer Komponente in Fahrtrichtung F nach vorne verlagert, so daß das Schwenken der Hauptsäule 6 um die Lagerstelle 7 in Richtung des Pfeils 21 zeitgleich einsetzt.

Durch die Aufwärtsverlagerung des Lagers 7 wird auch der am Gelenk 9 an der Karosserie angebundene Schwenklenker 8 in Richtung des Pfeils 22 verschwenkt und nimmt dabei auch das Lager 12 der Hauptführungssäule 11 mit, so daß auch dieses Lager gegenüber der geschlossenen Dachstellung bei der beginnenden Dachöffnung von der Hilfslinie H2 aufwärts verlagert wird. Diese Aufwärtsverlagerung fällt hier kleiner aus als die Aufwärtsverlagerung des Lagers 7 der Hauptführungsstange 6, kann aber eine besonders vorteilhafte Bewegungsbahn des Daches 2 mit seinem Anheben über Hindernisse sicherstellen.

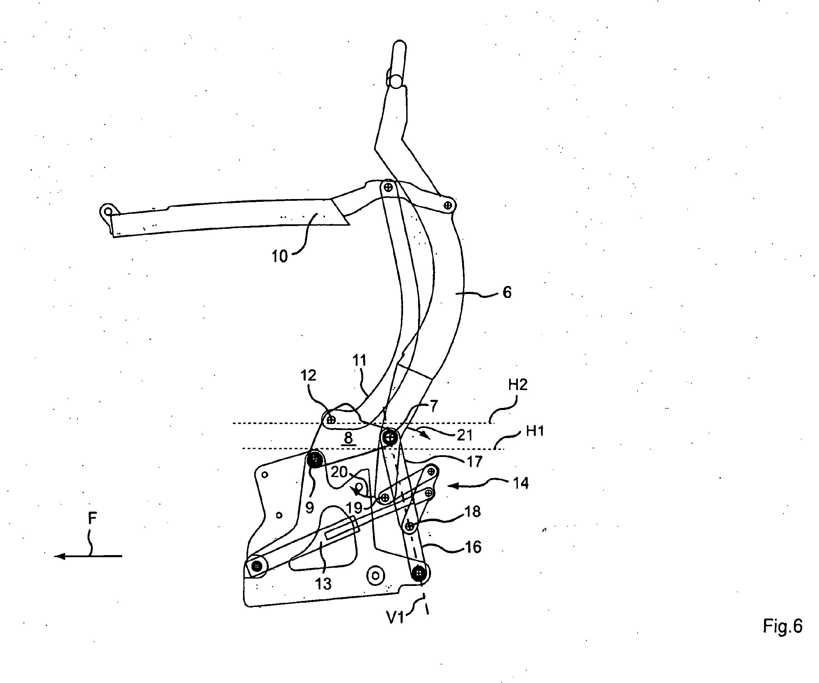

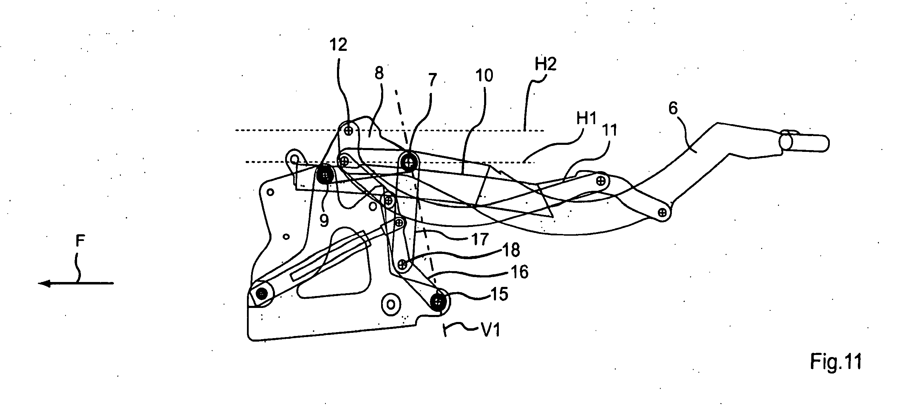

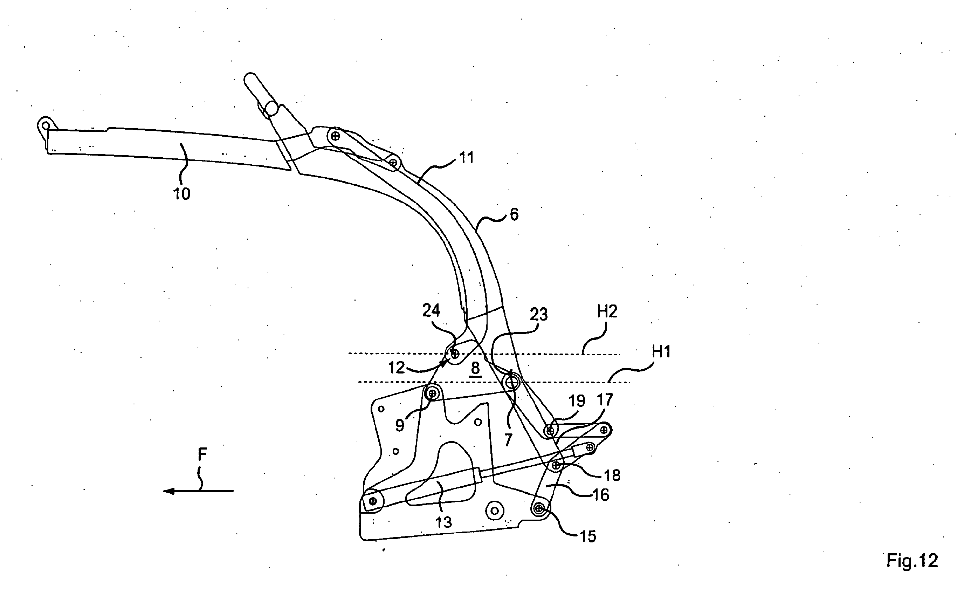

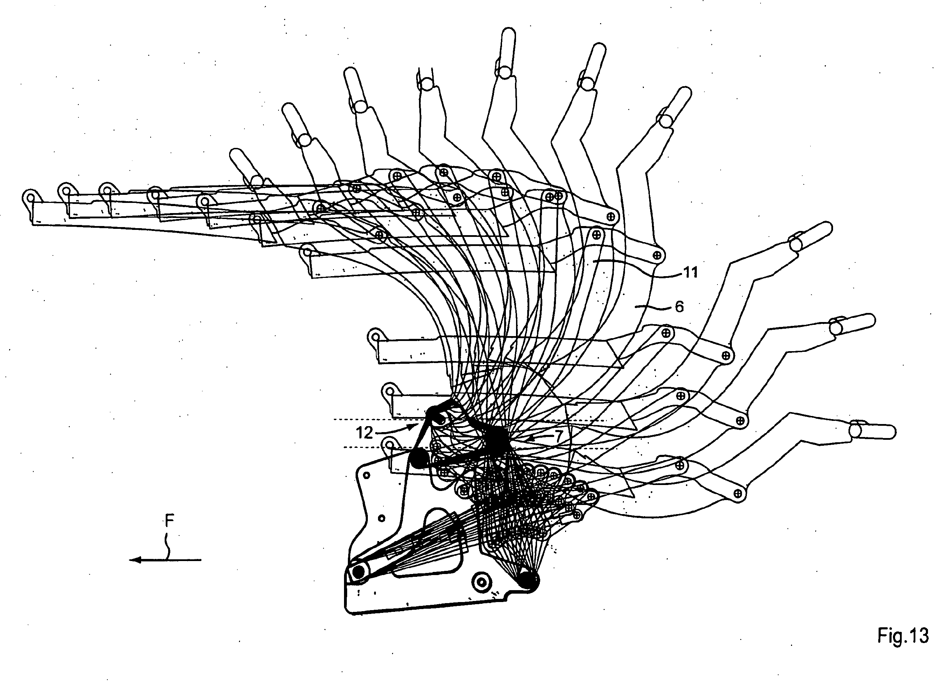

In der Stellung nach Fig. 6 stehen die Lenker 16 und 17 in ihrer gestreckten 180°-Stellung zueinander, wodurch das am Lenker 17 gehaltene Lager 7 - ebenso wie das Lager 12 - hier seinen höchsten Punkt innerhalb der Bewegung erreicht und von da an wieder absinkt, ehe es bei geöffnetem Dach wieder auf Ausgangshöhe, angedeutet durch die Hilfslinie H1, liegt (Fig. 11). Bei vollständig geschlossenem und vollständig offenem Dach 2 sind die Positionen der Lager 7 und 12 jeweils gleich, wie dies auch karosseriefesten Lagern entsprechen würde. Die Aufwärtsverlagerung der Lager 7, 12 findet daher nur bei ablaufender Bewegung statt. Beim Öffnen und Schließen des Daches werden von beiden beweglichen Lagern 7, 12 jeweils die gleichen Bahnkurven, nur in gegensinniger Richtung, durchlaufen. Diese Bahnkurven 23, 24 sind in Fig. 12 angedeutet und auch in der überlagerten Darstellung der Gesamtbewegung nach Fig. 13 erkennbar.

Die Ablagebewegung ist somit in jedem Fall eine überlagerte mit einer Schwenkkomponente um das Lager 7 und mit dessen Auf- und Abbewegung mit translatorischen und rotatorischen Anteilen. Auch das Lager 7 an sich muß kein reines Schwenklager sein.

Das gesamte bewegliche Dach 2 kann vor Einbau in den Rohbau auf Funktion getestet werden; die so fertig eingestellte modulare Einheit kann dann an den Rohbau angeliefert und montiert werden.

Die Erfindung ist zudem sowohl bei Fahrzeugen mit voll- oder teilautomatisch zu bewegenden Dächern, wie hier dargestellt, als auch bei manueller Beweglichkeit des Daches 2 anwendbar.

## Patentansprüche

1. Cabriolet-Fahrzeug (1) mit einem beweglichen Dach (2), das zumindest teilweise von einem Bezug (3) übergriffen ist und eine von einer Fensterbrüstungslinie (5) aufragende Hauptsäule (6) umfaßt, die mit einer Dichtungslinie zur Abdichtung des geschlossenen Daches (2) gegenüber seitlichen Scheiben (4) versehen ist und bei Dachöffnung um ein bei geschlossenem Dach (2) unterhalb einer Fensterbrüstungslinie (5) gelegenes Lager (7) heckwärts und abwärts beweglich ist,
**dadurch gekennzeichnet,**
**daß** das Lager (7) zumindest während eines Teils der Dachöffnungsbewegung gegenüber der geschlossenen Stellung aufwärts verlagert ist und durch die Verlagerung des Lagers (7), das die Hauptsäule (6) trägt, ein Wegführen der Hauptsäule (6) aus der Abdichtungsstellung nach schräg oben ermöglicht ist, wobei beim Schließen des Daches (2) in der Endphase der Dachbewegung die Dichtungslinie durch Abwärtsverlagerung des Lagers (7) zur dichtenden Anlage an die seitlichen Scheiben (4) bewegbar ist.

2. Cabriolet-Fahrzeug (1) nach Anspruch 1,
**dadurch gekennzeichnet,**
**daß** dem Fahrzeug neben der Hauptsäule (6) eine Hauptführungsstange (11) zwischen Dach (2) und Karosserie zugeordnet ist.

3. Cabriolet-Fahrzeug (1) nach Anspruch 2,
**dadurch gekennzeichnet,**
**daß** die Hauptführungsstange (11) an einem Lager (12) gehalten ist, das zumindest während eines Teils der Dachöffnungsbewegung gegenüber der geschlossenen Stellung aufwärts verlagert ist.

4. Cabriolet-Fahrzeug (1) nach Anspruch 3,
**dadurch gekennzeichnet,**
**daß** das Lager (12) der Hauptführungsstange (11) und das Lager (7) der Hauptsäule (6) an einem gemeinsamen Hebel (8) gehalten sind, der gegenüber einem karosseriefesten Hauptlager (9) während der Dachöffnung beweglich ist.

5. Cabriolet-Fahrzeug (1) nach Anspruch 4,
**dadurch gekennzeichnet,**
**daß** der gemeinsame Hebel (8) gegenüber dem Hauptlager (9) schwenkbeweglich ist.

6. Cabriolet-Fahrzeug (1) nach einem der Ansprüche 2 bis 5,
**dadurch gekennzeichnet,**
**daß** die Hauptführungsstange (11) und die Hauptsäule (6) nach Art eines Schwenkparallelogramms auf das Dach einwirken.

7. Cabriolet-Fahrzeug (1) nach einem der Ansprüche 1 bis 6,
**dadurch gekennzeichnet,**
**daß** die Aufwärtsverlagerung zumindest des Lagers (7) der Hauptsäule (6) mittels eines von einem Antrieb (13) ansteuerbaren Vorgelegegetriebes (14) bewirkbar ist.

8. Cabriolet-Fahrzeug (1) nach einem der Ansprüche 1 bis 7,
**dadurch gekennzeichnet,**
**daß** das Lager (7) der Hauptsäule (6) in geöffneter Dachstellung in derselben Position wie in geschlossener Dachstellung liegt.

9. Cabriolet-Fahrzeug (1) nach Anspruch 8,
**dadurch gekennzeichnet,**
**daß** das Lager (12) der Hauptführungsstange (11) in geöffneter Dachstellung in derselben Position wie in geschlossener Dachstellung liegt.

10. Cabriolet-Fahrzeug (1) nach einem der Ansprüche 1 bis 9,
**dadurch gekennzeichnet,**
**daß** die Aufwärtsverlagerung des oder der Lager (7;12) mit beginnender Dachöffnung einsetzt und mit dieser zwangsgekoppelt ist.

11. Cabriolet-Fahrzeug (1) nach einem der Ansprüche 1 bis 10,
**dadurch gekennzeichnet,**
**daß** von dem oder den Lager(n) (7;12) beim Schließen des Daches (2) die gleiche(n) Bahnkurve(n) (23;24) gegensinnig durchlaufen wird oder werden.

12. Bewegliches Fahrzeugdach (2) für ein Cabriolet-Fahrzeug (1) nach einem der Ansprüche 1 bis 11.

## Claims

1. A convertible vehicle (1) comprising a movable roof (2), with a cover (3) extending at least partially over said roof (2) and said roof (2) comprising a main pillar (6) which extends upwards from a window-sill line (5), said main pillar (6) being provided with a sealing line for sealing the closed roof (2) with respect to side windows (4) and being movable rearwards and downwards, while opening the roof, about a bearing (7), said bearing (7) being located below a window-sill line (5) when the roof (2) is closed,
**characterised in that**
the bearing (7) is displaced upwards with respect to the closed position, during at least part of the roof opening movement, and the displacement of the bearing (7) carrying the main pillar (6) allows the main pillar (6) to be guided away from the sealing position in an oblique upward fashion, the sealing line being movable into sealing contact with the side windows (4) by a downward movement of the bearing (7) when closing the roof (2) in the final phase of the roof movement.

2. The convertible vehicle (1) according to claim 1, **characterised in that**, in addition to the main pillar (6), a main guide bar (11), located between the roof (2) and the vehicle body, is assigned to the vehicle.

3. The convertible vehicle (1) according to claim 2, **characterised in that** the main guide bar (11) is held on a bearing (12) which is moved up with respect to the closed position at least during part of the roof opening movement.

4. The convertible vehicle (1) according to claim 3, **characterised in that** the bearing (12) of the main guide bar (11) and the bearing (7) of the main pillar (6) are held by a joint lever (8) which is movable, during the roof opening, with respect to a main bearing (9) fixed to the vehicle body.

5. The convertible vehicle (1) according to claim 4, **characterised in that** the joint lever (8) can pivot with respect to the main bearing (9).

6. The convertible vehicle (1) according to any one of claims 2 to 5, **characterised in that** the main guide bar (11) and the main pillar (6) act on the roof in the manner of a pivoting parallelogram.

7. The convertible vehicle (1) according to any one of claims 1 to 6, **characterised in that** the upward displacement of at least the bearing (7) of the main pillar (6) can be effected by means of an intermediate transmission (14) which is controllable by a drive (13).

8. The convertible vehicle (1) according to any one of claims 1 to 7, **characterised in that** the bearing (7) of the main pillar (6) assumes the same position both in the open roof position and in the closed roof position.

9. The convertible vehicle (1) according to claim 8, **characterised in that** the bearing (12) of the main guide bar (11) assumes the same position both in the open roof position and in the closed roof position.

10. The convertible vehicle (1) according to any one of claims 1 to 9, **characterised in that** the upward displacement of the bearing(s) (7;12) is initiated when the roof begins to open and is forcibly coupled with the opening of the roof.

11. The convertible vehicle (1) according to any one of claims 1 to 10, **characterised in that** the bearing(s) (7;12) follow the same path(s) (23;24) in the opposite direction during the closing of the roof (2).

12. Movable vehicle roof (2) for a convertible vehicle (1) according to any one of claims 1 to 11.

## Revendications

1. Véhicule cabriolet (1) comprenant un toit déplaçable (2) recouvert au moins partiellement d'une enveloppe (3) et comprenant un montant principal (6) qui s'étend vers le haut à partir d'une ligne de parapet de fenêtre (5), ledit montant principal (6) présentant une ligne d'étanchéité pour étancher le toit fermé (2) par rapport à des fenêtres latérales (4) et ledit montant principal (6) étant déplaçable, lors de l'ouverture du toit, vers l'arrière et vers le bas, autour d'un palier (7) disposé au-dessous d'une ligne de parapet de fenêtre (5) lorsque le toit (2) est fermé,
**caractérisé en ce que**
le palier (7) est déplacé vers le haut par rapport à la position fermée, pendant au moins une partie du mouvement d'ouverture du toit, et le déplacement dudit palier (7) supportant le montant principal (6) permet d'emmener le montant principal (6) obliquement vers le haut à partir de la position d'étanchéité, la ligne d'étanchéité étant déplaçable de manière à venir en contact étanche avec les fenêtres latérales (4) par un mouvement du palier (7) vers le bas lors de la fermeture du toit (2) dans la phase finale du mouvement de toit.

2. Véhicule cabriolet (1) selon la revendication 1, **caractérisé en ce qu'** en plus du montant principal (6), une barre de guidage principale (11), disposée entre le toit (2) et la carrosserie, est associée audit véhicule.

3. Véhicule cabriolet (1) selon la revendication 2, **caractérisé en ce que** la barre de guidage principale (11) est retenue sur un palier (12) qui est déplacé vers le haut par rapport à la position fermée pendant au moins une partie du mouvement d'ouverture de toit.

4. Véhicule cabriolet (1) selon la revendication 3, **caractérisé en ce que** le palier (12) de la barre de guidage principale (11) et le palier (7) du montant principal (6) sont retenus par un levier commun (8) qui est déplaçable par rapport à un palier principal (9), monté fixe sur la carrosserie, pendant l'ouverture du toit.

5. Véhicule cabriolet (1) selon la revendication 4, **caractérisé en ce que** le levier commun (8) peut basculer par rapport audit palier principal (9).

6. Véhicule cabriolet (1) selon l'une quelconque des revendications 2 à 5, **caractérisé en ce que** la barre de guidage principale (11) et le montant principal (6) agissent sur le toit à la manière d'un parallélogramme articulé.

7. Véhicule cabriolet (1) selon l'une quelconque des revendications 1 à 6, **caractérisé en ce que** le déplacement vers le haut d'au moins le palier (7) du montant principal (6) peut s'effectuer au moyen d'une transmission intermédiaire (14) commandé par un entraînement (13).

8. Véhicule cabriolet (1) selon l'une quelconque des revendications 1 à 7, **caractérisé en ce que** le palier (7) du montant principal (6) se trouve dans la même position soit dans la position d'ouverture du toit ou dans la position de fermeture du toit.

9. Véhicule cabriolet (1) selon la revendication 8, **caractérisé en ce que** le palier (12) de la barre de guidage principale (11) se trouve dans la même position soit dans la position d'ouverture du toit ou dans la position de fermeture du toit.

10. Véhicule cabriolet (1) selon l'une quelconque des revendications 1 à 9, **caractérisé en ce que** le déplacement vers le haut du (des) palier(s) (7;12) est initié lorsque le toit commence à s'ouvrir et est couplé par force à l'ouverture du toit.

11. Véhicule cabriolet (1) selon l'une quelconque des revendications 1 à 10, **caractérisé en ce que** le(s) palier(s) (7;12) suit (suivent) le(s) même(s) trajet(s) (23;24) en sens opposé lors de la fermeture du toit (2).

12. Toit mobile (2) pour un véhicule cabriolet (1) selon l'une quelconque des revendications 1 à 11.
